Europäisches Patentamt

(19) European Patent Office

Office européen des brevets

(11) Publication number: **0 205 350**
**A2**

(12) **EUROPEAN PATENT APPLICATION**

(21) Application number: 86304485.5

(22) Date of filing: 11.06.86

(51) Int. Cl.⁴: **F 16 L 11/08**
**F 16 L 35/00**

(30) Priority: 12.06.85 GB 8514916

(43) Date of publication of application:
17.12.86 Bulletin 86/51

(84) Designated Contracting States:
DE FR IT

(71) Applicant: Copely Developments limited
Thurmaston Lane
Leicester LE4 7HR(GB)

(72) Inventor: Copely, Brian James
c/o Copely Developments Limited Thurmaston Lane
Leicester LE4 7HR(GB)

(74) Representative: Coxon, Philip et al,
Eric Potter & Clarkson 14 Oxford Street
Nottingham NG1 5BP(GB)

(54) Hose.

(57) A hose (10) comprises an inner core (1), a reinforcing
material (2) upon the inner core (1) and an outer coating (3)
over the inner core (1) entrapping the reinforcing material (2).
The hose (10) includes sealed end portion (6) comprising a
portion of the hose (10) which is drawn back upon itself.

Fig. 1.

## HOSE

This invention relates to a hose, and in particular to a thin walled plastics hose having reinforcing threads within the wall thereof.

A hose of this general type is disclosed in our published European Patent Application No. 0036674A. Hoses of this general type are typically supplied either with metal fittings, such as tap connectors, swaged on to the hose, or with plastics compression fittings in which a screw-threaded ring around the end of the hose compresses a toothed compression ring or the like on to the hose to hold it firmly in the fitting and to ensure a watertight seal. The metal fittings, typically brass fittings, are applied to the hose under controlled conditions in the factory, and are therefore made reliably watertight. However it is possible during fixing on to a tap, for example, to loosen the tube and so reduce the efficiency of the watertight seal; this tends to happen when the tube instead of the fitting is manipulated during fixing onto the tap. In the case of the plastics fittings the seal is made sometimes imperfect, particularly as many of these are fitted by the user and the quality of the seal depends largely on hand tightening. In both cases, the failure of the seal can lead to high pressure water coming into contact with the exposed end of the hose and in particular to the cut ends of the reinforcing threads. It has been found that, under these conditions, water can be forced along the threads between the inner core and the outer plastics cover, and can lead to delamination. This may, in turn, give rise to leakage of water.

A further problem which arises, results from the improvements in the hoses themselves. As improved materials and manufacturing methods are employed, the wall thicknesses of the hoses can be reduced while maintaining the same resistance to internal pressure. However, many fittings at present on the market are designed for older thicker walled hoses and it is more difficult to form a perfect seal. Additionally, it is easier for the fittings themselves, whether plastics compression fittings or swaged metal fittings, to damage the hose, either at the compression ring or at the point at which the hose enters the fittings. The present invention seeks to avoid these difficulties.

According to one aspect of the invention there is provided a hose comprising an inner core, reinforcing material upon the inner core, and an outer coating over the inner core entrapping the reinforcing material, wherein at least one end of the hose has a sealed end portion formed by drawing the hose back upon itself.

Advantageously the sealed end portion comprises a first portion of the hose folded over a second portion of the hose, said first and second portions being integral.

Preferably each end of the hose is provided with a sealed end portion; usually the hose would have two ends.

Preferably also, the hose is drawn back a length substantially equal to the diameter of the hose.

Desirably the inner core is thicker than the outer coating. Desirably also, the inner core is made of a stronger material than the outer coating.

According to another aspect of the invention there is provided a method of forming a hose with a sealed end portion, which comprises drawing back a length of the hose upon itself.

Advantageously a first portion of the hose is folded over an integral second portion of the hose to form the sealed end portion.

Preferably the hose comprises an inner core, reinforcing material upon the inner core, and an outer coating over the inner core entrapping the reinforcing material. The hose may be formed by extruding the inner core, overlying the reinforcing material upon the inner core, then extruding the outer coating over the inner core and the reinforcing material.

Preferably the length of the hose is drawn back while the hose is at an elevated temperature below its extrusion temperature, but sufficiently high to permit the hose to be drawn back upon itself. This step is advantageously carried out immediately after extrusion of the outer coating of the hose. Upon cooling of the hose, the drawn back portion of the hose grips the underlying hose tightly and thus holds itself in place. However, in certain circumstances it may be desirable to weld the drawn back portion to the underlying hose, for example by welding techniques such as radio frequency welding or ultrasonic welding.

The invention is equally applicable to hoses having a smooth inner core and to hoses having contoured inner cores such as an inner core having ribs.

When the hose has already cooled to room temperature it may be warmed by warm air or water to an appropriate state of flexibility.

With the hose of the present invention, the risk of water being driven under pressure along the reinforcing threads or fibres is removed, because the cut end of the hose with the exposed fibres is kept well clear of any part of the fitting which might contain water under pressure. By making the inner core of a stronger material than the outer coating, and thicker than the outer coating, resistance to damage by the fitting of the end of the hose is increased. Furthermore, the additional thickness of the drawn back portion also makes it easier to obtain a satisfactory seal in fittings designed for conventional hoses.

With hoses which are stored in a flat, ribbon-like configuration, and which are expanded in use to a circular cross-section by water pressure, the drawn back portion has been found to adopt a circular or near-circular cross-section, assisting the introduction of the hose into a connector or other fitting.

Reference is now made to the accompanying drawings, in which:-

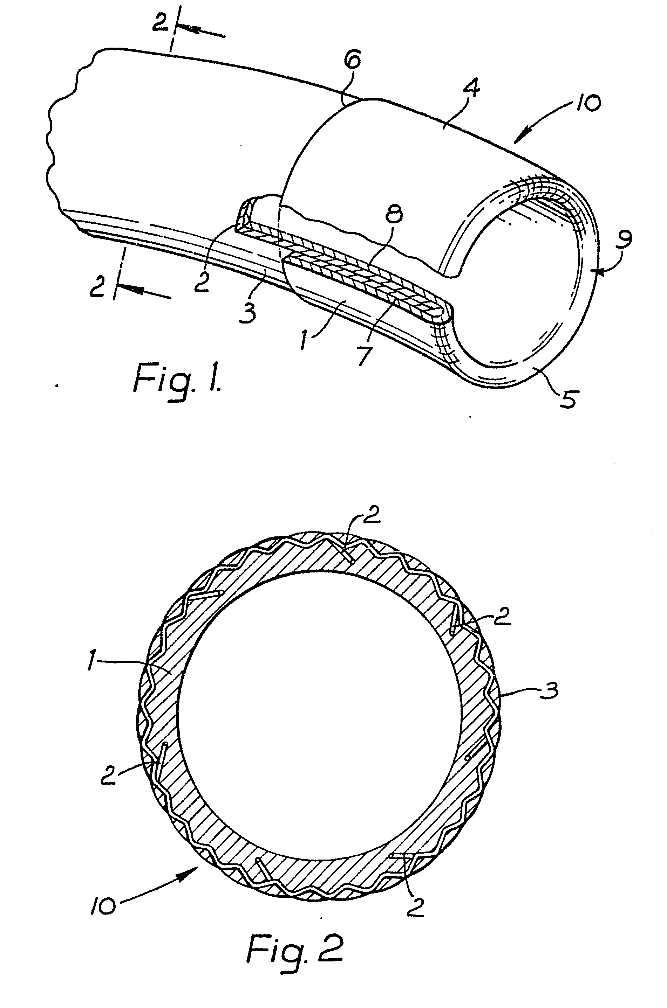

Figure 1 is a perspective view of an end portion of a hose in accordance with the invention; and

Figure 2 is a section on lines 2-2 of Figure 1.

In the drawings a hose generally designated 10 has an extruded plastics inner core 1, formed for example of polyvinyl chloride (PVC) with a continuously ribbed profile on the external surface thereof. In the manufacture of the hose 10, the core 1 is then reinforced with reinforcing yarn or threads 2 which are wound around the core 1 in a braiding manner. A outer coating 3 of PVC is then extruded over the braided inner core 1 and after cooling the hose 10 can be cut into suitable lengths and coiled. The outer coating 3 is thinner than the inner core 1.

While the tube is still at an elevated temperature, but below the extrusion temperature, an end portion 6 of the hose 10 approximately equal in length to the diameter of the hose 10 is turned back upon itself, for example by a suitably shaped former. The hose 10 is then allowed to cool to room temperature, and after cooling the turned back portion holds firmly on the hose 10 and leaves an end face 5 of the hose formed of the material of the inner core 1, which ensures that the reinforcing threads 2 are completely sealed from contact with the high pressure water within the fitting.

The end portion 6 comprises a first portion 7 which is folded over a second portion 8 integral with the first portion 7; the first portion 7 is connected to the

-5-

second portion 8 at a fold line 9 disposed at the end face 5 of the hose 1.

Whilst reference has been made throughout to sealing a hose for use with water, it will be appreciated that the hose of the invention can be used to carry other high pressure fluids; the material from which the hose is made can be varied to suit the requirements of a particular fluid.

CLAIMS

1. A hose comprising an inner core, reinforcing material upon the inner core, and an outer coating over the inner core entrapping the reinforcing material, wherein at least one end of the hose has a sealed end portion formed by drawing the hose back upon itself.

2. A hose according to Claim 1, in which the sealed end portion comprises a first portion of the hose folded over a second portion of the hose, said first and second portions being integral.

3. A hose according to Claim 1 or 2, in which each end of the hose is provided with a sealed end portion.

4. A hose according to Claim 1, 2 or 3 in which the hose is drawn back a length substantially equal to the outer diameter of the hose.

5. A hose according to any preceding claim in which the inner core is thicker than the outer coating.

6. A hose according to any preceding claim in which the material of the inner core is stronger than the material of the outer coating.

7. A method of forming a hose with a sealed end portion, which comprises drawing back a length of the hose upon itself.

8. A method according to Claim 7, in which a first portion of the hose is folded over an integral second portion of the hose to form the sealed end portion.

9. A method according to Claim 7 or 8, in which the hose comprises an inner core, a reinforcing material upon the inner core, and an outer coating over the inner core entrapping the reinforcing material.

10. A method according to Claim 9, in which the inner core is extruded, the reinforcing material is subsequently overlaid upon the reinforcing material and the outer coating is extruded over the inner core and the reinforcing material.

11. A method according to Claim 10, in which the hose is drawn back upon itself immediately after the overlying material is extruded over the inner core.

12. A method according to any of Claims 7 to 11, in which the length of the hose is drawn back while the hose is at an elevated temperature below its extrusion temperature, but sufficiently high to permit the hose to be drawn back upon itself.

Fig. 1.

Fig. 2